Europäisches Patentamt

European Patent Office

Office européen des brevets

(19)

(11) Veröffentlichungsnummer : **0 051 744**
**B1**

# (12) EUROPÄISCHE PATENTSCHRIFT

(45) Veröffentlichungstag der Patentschrift :
**15.05.85**

(21) Anmeldenummer : **81107906.0**

(22) Anmeldetag : **05.10.81**

(51) Int. Cl.⁴ : **C 08 G 18/36, C 08 G 18/30, C 08 G 18/66, C 08 G 18/42, C 08 G 18/48, C 08 G 18/10**

(54) **Verfahren zur Herstellung von kälteflexiblen, gegebenenfalls zellhaltigen Polyurethanelastomeren.**

(30) Priorität : **12.11.80 DE 3042558**

(43) Veröffentlichungstag der Anmeldung :
**19.05.82 Patentblatt 82/20**

(45) Bekanntmachung des Hinweises auf die Patenterteilung : **15.05.85 Patentblatt 85/20**

(84) Benannte Vertragsstaaten :
**BE DE FR GB IT**

(56) Entgegenhaltungen :
**DE-A- 2 850 608**
**DE-B- 1 160 181**
**DE-B- 2 105 062**
**DE-C- 1 112 285**
**GB-A- 1 485 986**
**US-A- 3 385 803**

(73) Patentinhaber : **BASF Aktiengesellschaft**
**Carl-Bosch-Strasse 38**
**D-6700 Ludwigshafen (DE)**

(72) Erfinder : **Nissen, Dietmar, Dr.**
**Ziegelhaeuser Landstrasse 31**
**D-6900 Heidelberg (DE)**
Erfinder : **Schmidt, Hans Ulrich**
**Wredestrasse 53**
**D-6700 Ludwigshafen (DE)**
Erfinder : **Straehle, Wolfgang, Dr.**
**Hirschgasse 20**
**D-6900 Heidelberg (DE)**
Erfinder : **Schuett, Uwe**
**Mozartstrasse 44**
**D-8031 Olching (DE)**
Erfinder : **Marx, Matthias, Dr.**
**Seebacher Strasse 49**
**D-6702 Bad Duerkheim (DE)**

EP 0 051 744 B1

**Beschreibung**

Die Erfindung betrifft ein Verfahren zur Herstellung von kälteflexiblen, vorzugsweise zellhaltigen Polyurethanelastomeren durch Umsetzung von

A) organischen Polyisocyanaten, vorzugsweise Polyester-polyol-präpolymeren mit NCO-Gehalten von 25 bis 10 Gew.-%,

B) Polyesterdiolen mit OH-Zahlen von 40 bis 120 und Glastemperaturen, gemessen als Glastemperatur des Polyurethan-Weichsegments, von − 10° bis − 80 °C oder hydroxylgruppenhaltigem Polytetrahydrofuran,

C) alkoxylierten Fettsäureestern und/oder alkoxylierten Terpenalkoholen und gegebenenfalls

D) Kettenverlängerungs- oder Vernetzungsmitteln in Gegenwart von Katalysatoren und gegebenenfalls Treibmitteln in Mengen von 0,1 bis 6 Gew.-Teilen der Komponente (C) pro 100 Gew.-Teilen der Komponenten (B) und gegebenenfalls (D)

und Molverhältnissen von reaktiven Wasserstoffatomen der Komponenten (B), (C) und gegebenenfalls (D) zu NCO-Gruppen der Komponente (A) von 0,90 bis 1,15 : 1.

Die Herstellung von zellhaltigen Polyurethanelastomeren aus Polyester-Polyolen, Polyisocyanaten und Kettenverlängerungsmittel wird in zahlreichen Literaturstellen, z. B. J. Cell. Plast. 13, 303 (1977), J. Cell. Plast. 10, 283 (1974) und Polymers Paint Colour J., Polyurethanes Symp. Univers. Surrey, Sept. 23/25. 1974. und Patentschriften z. B. GB-PS 1 485 986 beschrieben.

Neben vielen Eigenschaften dieser Polyesterurethanelastomeren, wie mechanischen Festigkeitswerten, Dehnung, Elastizität, niedriger Druckverformungsrest, Licht-, Oxydations- und Hydrolysebeständigkeit ist insbesondere eine hohe Kältestabilität erwünscht.

Diese Eigenschaften werden wesentlich durch die Wahl der die Polyurethanelastomeren bildenden Ausgangsstoffe bestimmt. In der Praxis verwendet man als Polyolkomponente bevorzugt endständige Hydroxylgruppen tragende, vorwiegend lineare Polyester, die durch Kondensation von Dicarbonsäuren mit Diolen oder Polymerisation von Caprolactonen hergestellt werden. Im Vergleich mit Polyurethanelastomeren auf Basis von Polyäther-polyolen oder äthergruppentragenden Polyolen zeichnen sich diese Polyesterpolyurethane durch ein höheres mechanisches Eigenschaftsniveau aus und zusätzlich noch durch eine geringere Anfälligkeit gegen Licht- und Oxidationsmitteleinwirkung.

Polyester-polyole auf Basis von z. B. Adipinsäure/Hexandiol-1,6 oder Adipinsäure/Butandiol-1,4 besitzen zwar in amorphem Zustand im Polyurethanelastomeren eine niedrige Glastemperatur und damit auch eine gute Kältestabilität ; ihre erhöhte Kristallisationsneigung führt jedoch zu einer Verhärtung und damit schlechten Kältefestigkeit, d. h. einem schlechteren elastischen Verhalten bei tiefen Temperaturen.

Außerdem wird durch die Kristallisationsneigung auch in der Polyester-polyolkomponente eine Verarbeitung als Zweikomponenten-one shot-System auf üblichen Nieder- und Hochdruck-Schäummaschinen unmöglich gemacht.

Durch Verwendung von Diolmischungen zur Herstellung der Polyesterpolyole wurde versucht die Kristallisation zu verhindern und das Kälteverhalten der Polyurethanelastomeren zu verbessern.

Durch den Einbau verzweigter Diole in das Polyesterpolyol, insbesondere 2,2-Dimethylpropandiol-1,3 neben Hexandiol-1,6 läßt sich die Kristallisationsneigung ebenfalls verringern. Dennoch sind auch die mit diesen Polyesterpolyolen hergestellten Polyurethanelastomeren bezüglich ihres Kälteverhaltens verbesserungswürdig. Dies gilt besonders für zellige Polyurethanelastomere mit Härten von ungefähr 45 bis 75 Shore A und Dichten von ungefähr 0,35 bis 0,65 g/cm³, wie sie für Schuhsohlen verwendet werden, deren Gebrauchstemperaturen von − 5 °C bis − 40 °C in Ländern mit anhaltenden Frostperioden nicht ungewöhnlich sind. Dementsprechend werden auch die Anforderungen für Qualitätsschuhsohlen aus Polyurethanelastomeren gestellt und Dauerbiegeprüfungen bei − 25 °C durchgeführt (z. B. SATRA Test Method PM.60 in Anlehnung an ASTM D 1052-55 und RAL-RG 702/1 in Anlehnung an DIN 53 522). Diese Tests werden von marktgängigen, für Schuhsohlen verwendbaren Polyurethanelastomeren zwar bei Raumtemperaturen bestanden, nicht jedoch bei Prüftemperaturen von − 25 °C.

Die Aufgabe der vorliegenden Erfindung bestand darin kälteflexible, vorzugsweise zellhaltige Polyurethanelastomere zu entwickeln, die bei − 25 °C eine gute Dauerbiegebeständigkeit aufweisen, so daß sie als Schuhsohlen in Ländern mit anhaltenden Frostperioden brauchbar sind.

Gegenstand der vorliegenden Erfindung ist somit ein Verfahren zur Herstellung von kälteflexiblen, gegebenenfalls zellhaltigen Polyurethanelastomeren durch Umsetzung von organischen Polyisocyanaten, Polyolen, Fettsäure- oder Terpenalkoholderivaten und gegebenenfalls Kettenverlängerungs- oder Vernetzungsmitteln in Gegenwart von Katalysatoren, gegebenenfalls Treibmitteln, Hilfs- und Zusatzstoffen, das dadurch gekennzeichnet ist, daß man als Polyole Polyester-polyole mit einer OH-Zahl von 40 bis 120 und einer Glastemperatur, gemessen als Glastemperatur des Polyurethan-Weichsegments, von − 10 °C bis − 80 °C oder hydroxylgruppenhaltige Polytetrahydrofurane mit OH-Zahlen von 20 bis 250 und als Fettsäure- oder Terpenalkoholderivate alkoxylierte Fettsäureester und/oder alkoxylierte Terpenalkohole verwendet.

Überraschenderweise zeigte sich, daß sich das Dauerbiegeverhalten von Polyester-Polyurethanelastomeren mit Glastemperaturen des Polyurethan-Weichsegments von kleiner als − 10 °C durch den Zusatz von alkoxylierten Fettsäureestern und/oder alkoxylierten Terpenalkoholen, insbesondere in Mengen von 0,1 bis 6 Gewichtsteilen pro 100 Gewichtsteilen des Gesamtgewichts aus Polyol und

2

gegebenenfalls Kettenverlängerungs- oder Vernetzungsmittel, soweit verbessern läßt, daß die Dauerbiegebeständigkeit bei − 25 °C wesentlich verlängert und außerdem auf einen breiteren Isocyanatindex für das entsprechende Polyurethansystem erweitert wird.

Für die Herstellung der kälteflexiblen, gegebenenfalls zellhaltigen Polyurethanelastomeren nach dem erfindungsgemäßen Verfahren werden als Polyole hydroxylgruppenhaltige Polytetrahydrofurane mit Hydroxylzahlen von 20 bis 250, vorzugsweise von 45 bis 120 und vorzugsweise Polyester-polyole mit Hydroxylzahlen 40 bis 120, vorzugsweise 40 bis 80 und Glastemperaturen, gemessen als Glastemperatur des Polyurethanelastomer-Weichsegments, von − 10 °C bis − 80 °C, vorzugsweise von − 15 bis − 40 °C und insbesondere − 18 °C bis − 35 °C verwendet. Die Polyester-polyole sind vorzugsweise zumindest überwiegend linear, d. h. im Sinne der Isocyanatadditionsreaktion difunktionell. Werden höherfunktionelle Polyester-polyole allein oder im Gemisch mit difunktionellen Polyester-polyolen verwendet, so können diese nur in solchen Mengen eingesetzt werden, das die Funktionalität bzw. durchschnittliche Funktionalität des Gemisches maximal 2,5, vorzugsweise 2 bis 2,2 ist. Die Polyester-polyole können dabei als Einzelkomponenten oder in Form von Mischungen zur Anwendung gelangen.

Geeignete Polyester-polyole können beispielsweise durch Polykondensation aus aliphatischen Dicarbonsäuren mit vorteilhafterweise 4 bis 6 Kohlenstoffatomen und Diolen mit 2 bis 6 Kohlenstoffatomen und/oder Diglykolen sowie durch Polymerisation von ω-Caprolactonen hergestellt werden. Beispielhaft genannt seien Dicarbonsäuren, wie Bernstein-, Glutar- und vorzugsweise Adipinsäure, Diole, wie Äthandiol, Pentandiol-1,5, Hexandiol-1,6, Neopentylglykol und vorzugsweise Butandiol-1,4 und Diglykole, wie Diäthylenglykol und Dipropylenglykol, wobei vorzugsweise Mischungen aus den genannten Diolen eingesetzt werden. Bewährt haben sich beispielsweise Polyesterpolyole, wie Hexandiol-1,6-Neopentylglykoladipat, Butandioladipat und vorzugsweise Äthandiol-, Butandiol-1,4-adipat, Butandiol-1,4-Pentandiol-1,5-Hexandiol-1,6-adipat, Ethylenglykoladipat, Ethylenglykol-diethylenglykoladipat und Polyester-polyole aus Bernstein-, Glutar- und Adipinsäuregemischen und den genannten Diolen sowie Polycaprolactondiol.

Neben den Polyolen können als weitere mit Isocyanaten reagierende Komponenten gegebenenfalls Kettenverlängerungs- oder Vernetzungsmittel mit Molekulargewichten kleiner als 300, vorzugsweise von 60 bis 200 zur Herstellung der Polyurethanelastomeren verwendet werden. Als Kettenverlängerungsmittel genannt seien beispielsweise Diole mit 2 bis 6 Kohlenstoffatome oder deren Gemische, wie Äthandiol, Hexandiol-1,6 und vorzugsweise Butandiol-1,4 sowie Vernetzungsmittel, wie Glycerin, Trimethylolpropan und Alkanolamine, wie Di- und Triäthanolamin. Das molare Verhältnis von Polyol zu Kettenverlängerungs- oder Vernetzungsmittel ist abhängig von der gewünschten Kälteflexibilität und Härte der Polyurethanelastomeren und kann beispielsweise variiert werden, von 1 ; 0,9 bis 1 : 1,15, vorzugsweise 1 : 0,95 bis 1,10.

Wie bereits erwähnt wurde, ist zur Erzielung von Polyurethanelastomeren mit guter Kälteflexibilität erfindungswesentlich, daß alkoxylierte Fettsäureester und/oder alkoxylierte Terpenalkohole zu deren Herstellung mitverwendet werden. Vorteilhafterweise eingesetzt werden die alkoxylierten Fettsäureester und/oder alkoxylierten Terpenalkohole in Mengen von 0,1 bis 6 Gew.-Teilen, vorzugsweise 1 bis 5 Gew.-Teilen pro 100 Gewichtsteilen Polyol und gegebenenfalls Kettenverlängerungs- oder Vernetzungsmittel. Geeignete alkoxylierte Fettsäureester oder Terpenalkohole werden erhalten durch Alkoxylierung von einem Mol eines Fettsäureesters mit 8 bis 26, vorzugsweise 16 bis 24 Kohlenstoffatomen im Fettsäurerest oder Terpenalkohols mit 10 bis 20 Kohlenstoffatomen mit 1 bis 30 Mol, vorzugsweise 10 bis 20 Mol Ethylen- und/oder Propylenoxid, wobei die Alkylenoxid einzeln, einzeln nacheinander, abwechselnd nacheinander oder im Gemisch untereinander polymerisiert werden können.

Als Fettsäureester genannt seien beispielsweise die Mono-, Di- und/oder Triglyceride von gesättigten und/oder ungesättigten Fettsäuren, wie Capryl-, Laurin-, Palmitin-, Stearin, Arachin, Behen, Lignocerin-, Olein-, Ricinolein-, Linol- und Linolensäure und die Ester von Hydroxycarbonsäuren mit 12 bis 26 Kohlenstoffatomen und Alkoholen mit 10 bis 26 Kohlenstoffatomen. Bewährt haben sich insbesondere alkoxyliertes Ricinusöl, Ernußöl, Tallöl und Türkischrotöl sowie alkoxylierte Terpenalkohole. Vorzugsweise verwendet werden die alkoxylierten Fettsäureester.

Als organische Polyisocyanate kommen beispielsweise 4,4'-Diphenylmethan-diisocyanat und allophanat- und/oder carbodiimidgruppenhaltige Polyisocyanate auf Basis von 4,4'-Diphenylmethandiisocyanat mit NCO-Gehalten von 25 bis 33 in Betracht. Besonders bewährt haben sich jedoch und daher vorzugsweise verwendet als Polyisocyanate werden Polyester-polyol-präpolymere mit NCO-Gehalten von kleiner als 25 Gew.-%, vorzugsweise 10 bis 20 Gew.-%, bezogen auf das Gesamtgewicht. Die Polyesterpolyol-präpolymere werden vorteilhafterweise hergestellt aus gegebenenfalls mit Allophanat- und/oder Carbodiimidgruppen modifiziertem 4,4'-Diphenylmethan-diisocyanat und beliebigen, vorzugsweise jedoch den obengenannten Polyester-polyolen mit Glastemperaturen, gemessen als Glastemperatur des Polyurethanelastomer-Weichsegments, von − 15 °C bis − 80 °C wobei die Funktionalität der Polyesterpolyole von 2,0 bis 3,0 betragen kann.

Zur Herstellung der kälteflexiblen, gegebenenfalls zellhaltigen Polyurethanelastomeren werden die Polyole, alkoxylierten Fettsäureester und/oder alkoxylierten Terpenalkohole und gegebenenfalls Kettenverlängerungs- oder Vernetzungsmittel und organischen Polyisocyanate in solchen Mengen zur Reaktion gebracht, daß das Verhältnis von Zerewitinoff aktiven Wasserstoffatomen, beispielsweise gebunden an OH-, NH$_2$- oder NH-Gruppen, zu NCO-Gruppen 0,90 bis 1,15 : 1, vorzugsweise ungefähr 1 : 1 beträgt.

Geeignete Katalysatoren, welche die Reaktion zwischen den Zerewitinoff aktiven Wasserstoffatomen der Polyole, alkoxylierten Fettsäureester und/oder Terpenalkohole und gegebenenfalls Kettenverlängerungs- oder Vernetzungsmittel und NCO-Gruppen der Polyisocyanate beschleunigen, sind die nach dem Stand der Technik bekannten und üblichen tertiären Amine wie z. B. Dimethylcyclohexylamin, N-Methylmorpholin, N,N'-Dimethyl-piperazin, das Harnstoffaddukt aus Hexamethylen-diisocyanat und N-Methylethanolamin u. a. und vorzugsweise Diazabicyclo-(2,2,2)-octan sowie auch organische Metallverbindungen wie Titansäureester, Eisenverbindungen z. B. Eisenacetonylacetonat, Eisen(II)chlorid, Zinkchlorid, Zinndiacetat, Zinndioctoat, Zinndilaurat oder die Zinndialkylsalze aliphatischer Carbonsäuren wie Dibutylzinndiacetat, Dibutylzinndilaurat oder ähnliche.

Zur Erzielung günstiger Reaktionszeiten und in Abhängigkeit von der Aktivität des gewählten Katalysators bzw. Katalysatorgemisches wird die einzusetzende Menge empirisch ermittelt. Eingesetzt werden zweckmäßigerweise 0,01 bis 10 Gew.-%, vorzugsweise 0,01 bis 3 Gew.-% Katalysator auf Basis tertiärer Amine, bezogen auf das Polyolgewicht.

Nach dem erfindungsgemäßen Verfahren können kompakte und vorzugsweise zellhaltige Polyurethanelastomere hergestellt werden. Zur Herstellung von zellhaltigen Produkten werden Treibmittel mitverwendet. Ein geeignetes Treibmittel ist beispielsweise Wasser, das mit Isocyanatgruppen unter Bildung von Kohlendioxid reagiert. Die Wassermengen, die zweckmäßigerweise verwendet werden können, betragen 0,01 bis 5 Gew.-%, vorzugsweise 0,05 bis 1,0 Gew.-%, bezogen auf das Gewicht an Polyol.

Andere verwendbare Treibmittel, die gegebenenfalls allein oder zusätzlich verwendet werden, sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte von nicht über 100 °C bei Atmosphärendruck, vorzugsweise zwischen + 20 und + 65 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan sowie niedermolekulare Alkane, wie Pentan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung der zellhaltigen Polyurethan-Elastomeren hängt ab von der Dichte, die man erreichen will, sowie gegebenenfalls von der verwendeten Wassermenge. Im allgemeinen liefern Mengen von 0,5 bis 15 Gew.-%, bezogen auf das Gewicht des Polyols, zufriedenstellende Ergebnisse.

Der Reaktionsmischung können auch noch Hilfsmittel und Zusatzstoffe einverleibt werden. Genannt seien beispielsweise Reaktionsverzögerer, Stabilisatoren, Hydrolysenschutzmittel, Porenregler, fungizid und bakteriozid wirkende Substanzen, Farbstoffe, Pigmente, Füllstoffe, oberflächenaktive Stoffe und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der zellhaltigen Elastomeren zu regulieren. Genannt seien beispielhaft Siloxan-Oxyalkylen-Mischpolymerisate und andere Organopolysiloxane, oxäthylierte Alkylphenole, oxäthylierte Fettalkohole Paraffinöle, Rizinusöl- bzw. Rizinolsäureester und Türkischrotöl, die in Mengen von 0,2 bis 6 Gewichtsteilen pro 100 Gewichtsteilen Polyol angewandt werden.

Als Flammschutzmittel seien neben gegebenenfalls halogensubstituierten Phosphaten, wie Trikresylphosphat, Tris-2-chloräthylphosphat, Tris-chlorpropylphosphat und Tris-2,3-dibrompmropylphosphat und organischen Halogenverbindungen wie Polybromdiphenyläther, Bromoligomerstyrol, anorganische Flammschutzmittel, wie Antimontrioxid, Arsenoxid, Ammoniumphosphat, Calciumphosphat und roter Phosphor genannt. Im allgemeinen hat es sich als vorteilhaft erwiesen, 5 bis 50 Gewichtsteile, vorzugsweise 5 bis 25 Gewichtsteile eines oder mehrerer der genannten Flammschutzmittel für jeweils 100 Gewichtsteile Polyurethan zu verwenden.

Die Herstellung der gegebenenfalls zellhaltigen Polyurethan-Elastomeren geschieht nach den an sich bekannten Verfahren. Erfolgt die Herstellung kompakter Polyurethan-Elastomerer beispielsweise nach dem Präpolymerverfahren, so wird zunächst aus dem Polyol mit überschüssigem Polyisocyanat ein isocyanatgruppenhaltiges Präpolymeres hergestellt, das nach Zugabe von weiterem Polyol, alkoxyliertem Fettsäureester und/oder alkoxyliertem Terpenalkohol und gegebenenfalls Kettenverlängerungs- oder Vernetzungsmittel in eine Form gegossen und gegebenenfalls nach der Aushärtung in ein Granulat übergeführt wird, das sich bei erhöhter Temperatur unter Formgebung verpressen, extrudieren, spritzgießen oder kalandrieren läßt.

Nach einer anderen Arbeitsweise wird der alkoxylierte Fettsäureester und/oder alkoxylierte Terpenalkohol, gegebenenfalls Kettenverlängerungs- oder Vernetzungsmittel sowie gegebenenfalls die Hilfs- und Zusatzstoffe dem Polyol einverleibt und das erhaltene Gemisch im sogenannten Einstufenverfahren mit dem Polyisocyanat oder isocyanatgruppenhaltigen Präpolymeren umgesetzt.

Zur Herstellung von zellhaltigen Polyurethanelastomeren, die vorzugsweise nach dem Einstufenverfahren erfolgt, wird üblicherweise eine Mischung aus Polyol, alkoxyliertem Fettsäureester und/oder alkoxyliertem Terpenalkohol, Kettenverlängerungs- oder Vernetzungsmittel, Katalysator, Treibmittel und gegebenenfalls Hilfs- und Zusatzstoffen und dem organischen Polyisocyanat oder vorzugsweise isocyanatgruppenhaltigen Präpolymeren bei Temperaturen von 15 bis 85 °C, vorzugsweise 30° bis 70 °C

zur Umsetzung gebracht. Bei Verwendung einer Mischkammer mit mehreren Zulaufdüsen können die Ausgangskomponenten einzeln zugeführt und in der Mischkammer intensiv vermischt werden. Als besonders zweckmäßig hat es sich jedoch erwiesen, so daß diese Verfahrensweise bevorzugt angewandt wird, nach dem Zweikomponenten-Verfahren zu arbeiten und einen Teil des Polyols, den alkoxylierten Fettsäureester und/oder alkoxylierten Terpenalkohol, Katalysator, Treibmittel und gegebenenfalls Kettenverlängerungs- oder Vernetzungsmittel, Hilfs- und Zusatzstoffe zu der sogenannten A-Komponente zu vereinigen und als B-Komponente das organische Polyisocyanat oder vorzugsweise ein isocyanatgruppenhaltiges Präpolymeres, insbesondere ein Polyesterpolyol-präpolymeres aus einem Polyesterpolyol mit der obengenannten Glastemperatur und 4,4'-Diphenylmethan-diisocyanat mit einem NCO-Gehalt von 25 bis 10 Gew.-% zu verwenden. Vorteilhaft ist hierbei, daß die A- und B-Komponenten raumsparend transportiert und beschränkte Zeit gelagert werden können und vor Herstellung der zellhaltigen Polyurethanelastomeren nach dem bekannten Niederdruck- oder Hochdruckdosierverfahren nur noch intensiv gemischt werden müssen.

Die erfindungsgemäß hergestellten kompakten Polyurethanelastomeren besitzen Dichten von 0,8 bis 1,2 g/l und Shore-Härten von 35 Shore A bis 60 Shore D. Die Produkte finden Verwendung als Verschleißfläche von Sportschuhen, Sohlen für Arbeitsschuhe, Scheuerkanten u. a.

Die zellhaltigen Polyurethanelastomeren besitzen Dichten von 0,1 bis 0,8 g/l und eignen sich insbesondere zur Herstellung von Schuhsohlen von Laufschuhen und Stiefeln sowie Sportschuhen und sogenannten Trainingsschuhsohlen.

Die gebenenfalls zellhaltigen Polyurethanelastomeren besitzen ein außerordentlich günstiges Kälteverhalten, insbesondere eine gute Dauerbiegebeständigkeit bei Temperaturen von $-20$ bis $-30\,^{\circ}\mathrm{C}$.

Die in den Beispielen genannten Teile beziehen sich auf das Gewicht.

### Beispiele und Vergleichsbeispiele

Zur Herstellung von zellhaltigen Polyurethanelastomeren werden die in der Tabelle genannten Ausgangsstoffe zu der A- bzw. B-Komponente vereinigt, durch intensives Rühren homogenisiert und mit Hilfe einer Zweikomponenten-Dosiermaschine vom Typ EMB F 20 ST in den genannten Mengenverhältnissen gemischt. Die Temperatur der A- und B-Komponente beträgt dabei 50 °C.

200 g der erhaltenen Reaktionsmischung werden in eine Aluminiumform mit den Abmessungen 200 mm × 200 mm × 10 mm und einer Formoberflächentemperatur von 45° bis 50 °C eingefüllt und darin aushärten gelassen. Die Rohdichte der erhaltenen Prüfplatten beträgt 0,5 g/cm³.

Die Ausgangskomponenten werden in der Tabelle wie folgt abgekürzt :

### Polyester-Polyole

Polyesterol A : Glykol-butandiol-adipat mit einer OH-Zahl von 56 und einer $Tg^W$ von $-29\,^{\circ}\mathrm{C}$.
Molverhältnis Glykol : Butandiol = 2 : 1

Polyesterol B : Glykol-diglykol-adipat mit einer OH-Zahl von 56 und einer $Tg^W$ von $-25\,^{\circ}\mathrm{C}$.
Molverhältnis Glykol : Diglykol = 1,5 : 1

### Polyisocyanate

Isocyanat A : NCO-gruppenhaltiges Präpolymeres auf Basis von 4,4'-Diphenylmethan-diisocyanat und Diglykoladipat (OH-Zahl 42) mit einem NCO-Gehalt von 20,3 %.

### Herstellungsvorschrift

60 Teile 4,4'-Diphenylmethan-diisocyanat werden auf 80 °C erwärmt ; anschließend werden der Schmelze unter Rühren 40 Teile Diglykoladipat (OH-Zahl 42) einverleibt und die Mischung bei 80 °C 2 Stunden gehalten. Danach wird auf 50 °C abgekühlt und 20 Teile carbodiimidgruppenhaltiges 4,4'-Diphenylmethan-diisocyanat mit einem NCO-Gehalt von 29,6 hinzugefügt. Das erhaltene Präpolymere besitzt einen NCO-Gehalt von 20,3 %.

Isocyanat B : NCO-gruppenhaltiges Präpolymeres auf Basis 4,4'-Diphenylmethan-diisocyanat und Butandiol-pentandiolhexandiol-adipat (OH-Zahl 56) mit einem NCO-Gehalt von 14,7 ± 0,2 %.

### Herstellungsvorschrift

Zu 50 Teilen 4,4'-Diphenylmethandiisocyanat fügt man unter Rühren bei 80 °C innerhalb einer Stunde 50 Teile Butandiolpentandiol-hexandiol-adipat (OH-Zahl 56) und führt die Reaktion in 2 Stunden bei 80 °C zu Ende. Das erhaltene Präpolymere besitzt einen NCO-Gehalt von 14,7 ± 0,2 %.

Alkoxylierte Fettsäureester :

**0 051 744**

Zusatzmittel A : Propoxyliertes Ricinusöl mit einer OH-Zahl 96

Zusatzmittel B : Terpenalkohol-Isophythol (Gew.-Verhältnis = 2 : 1)-ethylenoxidaddukt, Hydroxylzahl 38

Vergleichssubstanzen

Zusatzmittel I : Dodecenylbernsteinsäuremonoester eines $C_{13}/C_{15}$-Alkoholgemisches.

Zusatzmittel II : Dodecylbernsteinsäuredimethylaminopropylamid.

(Siehe Tabelle Seite 7 f.)

Tabelle

| Ausgangsstoffe / Beispiele / Vergleichsbeispiele | | 1 | 2 | 3 | 4 | 5 | 6 | 7 | I | II |
|---|---|---|---|---|---|---|---|---|---|---|
| A-Komponente: | | | | | | | | | | |
| Polyesterol A | (Gew.-Teile) | 84,46 | 84,46 | 84,46 | 79,18 | 78,14 | – | – | 84,46 | 84,46 |
| Polyesterol B | " | – | – | – | – | – | 78,14 | 78,14 | – | – |
| Butandiol-1,4 | " | 14,61 | 14,61 | 14,61 | 17,70 | 17,70 | 17,70 | 17,70 | 14,61 | 14,61 |
| Triäthylendiamin | " | 0,42 | 0,42 | 0,42 | 0,56 | 0,56 | 0,56 | 0,56 | 0,42 | 0,42 |
| Wasser | " | 0,34 | 0,34 | 0,34 | 0,45 | 0,45 | 0,45 | 0,45 | 0,34 | 0,34 |
| Silikon DC 190 (Dow Corning) | " | 0,17 | 0,17 | 0,17 | 0,20 | 0,20 | 0,20 | 0,20 | 0,17 | 0,17 |
| Zusatzmittel A | " | 0,5 | 1,0 | 1,5 | 1,91 | 2,95 | 2,95 | – | – | – |
| Zusatzmittel B | " | – | – | – | – | – | – | 2,95 | – | – |
| Zusatzmittel I | " | – | – | – | – | – | – | – | 1,0 | – |
| Zusatzmittel II | " | – | – | – | – | – | – | – | – | 1,0 |
| B-Komponente: | | | | | | | | | | |
| Isocyanat A | " | 93 | 93 | 93 | – | – | – | – | 93 | 93 |
| Isocyanat B | " | – | – | – | 146 | 148 | 151 | 152 | – | – |
| Eigenschaften | | | | | | | | | | |
| Shore A | | 60 | 59 | 58 | 53 | 53 | 53 | 50 | – | – |
| Reißfestigkeit | [N/mm²] | 7,2 | 6,8 | 6,8 | 6,1 | 6,1 | 6,1 | 6,0 | – | – |
| Reißdehnung | [%] | 440 | 480 | 450 | 430 | 430 | 430 | 410 | – | – |
| Weiterreißfestigkeit | [N/mm²] | 12 | 9,5 | 8,3 | – | – | – | – | – | – |
| Dauerbiegetest nach RAL-RG 702/1) bei 23°C | | – | – | – | keine | keine | keine | keine | – | – |
| [Sticherweiterung nach 30 000 ) bei -25°C Biegungen in mm] ) | | – | – | – | – | – | keine | keine | – | – |
| Dauerbiegetest nach SATRA bei -25°C: | | | | | | | | | | |
| [Bruch nach Minuten] | | 45 | 80 | 130 | – | – | – | – | 22 | 1 |
| [Sticherweiterung nach 30 000 Biegungen in mm] | | – | – | – | 8 | keine | keine | keine | – | – |

**0 051 744**

**Patentansprüche**

1. Verfahren zur Herstellung von kälteflexiblen, gegebenenfalls zellhaltigen Polyurethanelastomeren durch Umsetzung von organischen Polyisocyanaten, Polyolen, Fettsäure- oder Terpenalkoholderivaten und gegebenenfalls Kettenverlängerungs- oder Vernetzungsmitteln in Gegenwart von Katalysatoren, gegebenenfalls Treibmitteln, Hilfs- und Zusatzstoffen, dadurch gekennzeichnet, daß man als Polyole Polyester-polyole mit einer OH-Zahl on 40 bis 120 und einer Glastemperatur, gemessen als Glastemperatur des Polyurethan-Weichsegments, von − 10 °C bis − 80 °C oder hydroxylgruppenhaltige Polytetrahydrofurane mit OH-Zahlen von 20 bis 250 und als Fettsäure- oder Terpenalkoholderivate alkoxylierte Fettsäureester und/oder alkoxylierte Terpenalkohole verwendet.

2. Verfahren nach Anspruch 1, dadurch gekennzeichnet, daß man die alkoxylierten Fettsäureester und/oder alkoxylierten Terpenalkohole in Mengen von 0,1 bis 6 Gewichtsteilen bezogen auf 100 Gewichtsteile Polyol und gegebenenfalls Kettenverlängerungs- oder Vernetzungsmittel verwendet.

3. Verfahren nach Anspruch 1, dadurch gekennzeichnet, daß man als alkoxylierte Fettsäureester Reaktionsprodukte aus einem Mol eines hydroxylgruppenhaltigen Fettsäureesters mit 8 bis 26 Kohlenstoffatomen im Fettsäurerest und 1 bis 30 Mol Ethylenoxid und/oder Propylenoxid verwendet.

4. Verfahren nach Anspruch 3, dadurch gekennzeichnet, daß man als hydroxylgruppenhaltige Fettsäureester Fettsäure-mono-, di- und/oder triglyceride verwendet.

5. Verfahren nach Anspruch 1, dadurch gekennzeichnet, daß man als alkoxylierte Terpenalkohole Reaktionsprodukte aus einem Mol eines Terpenalkohols mit 10 bis 25 Kohlenstoffatomen oder einer Terpenalkoholmischung und 1 bis 30 Mol Ethylenoxid und/oder Propylenoxid verwendet.

6. Verfahren nach Anspruch 1, dadurch gekennzeichnet, daß man als organische Polyisocyanate Polyesterpolyol-präpolymere mit NCO-Gehalten von 25 bis 10 Gew.-% verwendet, das hergestellt werden durch Umsetzung von Polyisocyanaten mit Polyester-polyolen mit einer Funktionalität von 2,0 bis 3,0.

7. Verfahren nach Anspruch 6, dadurch gekennzeichnet, daß man zur Herstellung der Polyesterpolyol-präpolymeren als Polyisocyanate 4,4'-Diphenylmethan-diisocyanat, carbodiimid- und/oder allophanatgruppenhaltiges 4,4'-Diphenylmethan-diisocyanat verwendet.

8. Verfahren nach Anspruch 1, dadurch gekennzeichnet, daß das Verhältnis von reaktiven Wasserstoffatomen der Polyole, alkoxylierten Fettsäureester und/oder alkoxylierten Terpenalkohole und gegebenenfalls Kettenverlängerungs- oder Vernetzungsmittel zu NCO-Gruppen der Polyisocyanate oder NCOgruppenhaltigen Präpolymeren 0,90 bis 1,15 : 1 beträgt.

9. Verfahren zur Herstellung von kälteflexiblen, zellhaltigen Polyurethanelastomeren, dadurch gekennzeichnet, daß man
A) Polyesterpolyol-präpolymere mit NCO-Gehalten von 25 bis 10 Gew.-%,
B) Polyesterdiole mit OH-Zahlen von 40 bis 120 und Glastemperaturen, gemessen als Glastemperatur des Polyurethan-Weichsegments von − 10 bis − 80 °C,
C) alkoxylierte Fettsäureester, hergestellt durch Alkoxylierung von Fettsäureestern mit 8 bis 26 Kohlenstoffatomen im Fettsäurerest mit Ethylen- und/oder Propylenoxid im Molverhältnis 1 : 1 bis 1 : 30 und
D) gegebenenfalls Kettenverlängerungs- oder Vernetzungsmittel
in Gegenwart von Katalysatoren, Treibmitteln, gegebenenfalls Hilfs- und Zusatzstoffen in Mengen von 0,1 bis 6 Gew.-Teilen der Komponente (C) pro 100 Gew.-Teilen der Komponenten (B) und gegebenenfalls (D) sowie Molverhältnissen von reaktiven Wasserstoffatomen der Komponenten (B), (C) und gegebenenfalls (D) zu NCO-Gruppen der Komponente (A) von 0,90 bis 1,15 : 1 umsetzt.

**Claims**

1. A process for the production of cellular or non-cellular polyurethane elastomers which are flexible at low temperatures by reacting organic polyisocyanates, polyols and fatty acid or terpene alcohol derivatives, with or without chain extenders or crosslinking agents, in the presence of catalysts and optional blowing agents, auxiliaries and additives, wherein the polyols used are polyester polyols having an OH number of 40 to 120 and a glass transition temperature, measured as the glass transition temperature of the soft segment of the polyurethane, of from − 10 to − 80 °C, or hydroxyl-containing polytetrahydrofurans having an OH number of 20 to 250, and wherein the fatty acid or terpene alcohol derivatives used are alkoxylated fatty acid esters and/or alkoxylated terpene alcohols.

2. A process as claimed in claim 1, wherein the alkoxylated fatty acid esters and/or alkoxylated terpene alcohols are used in an amount of from 0.1 to 6 parts by weight per 100 parts by weight of polyol and optional chain extenders or crosslinking agents.

3. A process as claimed in claim 1, wherein the alkoxylated fatty acid esters used are reaction products of 1 mole of a hydroxyl-containing fatty acid ester, containing 8 to 26 carbon atoms in the fatty acid radical, and 1 to 30 moles of ethylene oxide and/or propylene oxide.

4. A process as claimed in claim 3, wherein the hydroxyl-containing fatty acid esters used are fatty acid mono-, di- and/or triglycerides.

5. A process as claimed in claim 1, wherein the alkoxylated terpene alcohols are reaction products of one mole of a terpene alcohol of 10 to 25 carbon atoms, or of a terpene alcohol mixture, and 1 to 30 moles of ethylene oxide and/or propylene oxide.

6. A process as claimed in claim 1, wherein the organic polyisocyanates used are polyester polyol prepolymers which have an NCO content of 10 to 25 % by weight and are prepared by reacting polyisocyanates with polyester polyols having a functionality of 2.0 to 3.0.

7. A process as claimed in claim 6, wherein the polyisocyanates used to prepare the polyester polyol prepopylers are 4,4'-diphenylmethane diisocyanate, and carbodiimide- and/or allophonate-group-containing 4,4'-diphenylmethane diisocyanate.

8. A process as claimed in claim 1, wherein the ratio of reactive hydrogen atoms of the polyols, alkoxylated fatty acid esters and/or alkoxylated terpene alcohols and optional chain extenders or crosslinking agents to NCO groups of the polyisocyanates or NCO-group-containing prepolymers is 0.90 : 1 to 1.15 : 1.

9. A process for the production of cellular polyurethane elastomers which are flexible at low temperatures, wherein

A) polyester polyol prepolymers having an NCO content of 10 to 25 % by weight,

B) polyester diols having an OH number of 40 to 120 and a glass transition temperature, measured as the glass transition temperature of the solft segment of the polyurethane, of from − 10 to − 80 °C,

C) alkoxylated fatty acid esters produced by alkoxylation of fatty acid esters, containing 8 to 26 carbon atoms in the fatty acid radical, with ethylene oxide and/or propylene oxide in a molar ratio of 1 : 1 to 1 : 30, and

D) optional chain extenders or crosslinking agents

are reacted in the presence of catalysts, blowing agents and, if desired, auxiliaries and additives, component (C) being used in an amount of from 0.1 to 6 parts by weight per 100 parts by weight of component (B) and optional component (D), and the molar ratio of reactive hydrogen atoms of components (B) and (C) and optional component (D) to NCO groups of component (A) being from 0.90 : 1 to 1.15 : 1.

### Revendications

1. Procédé de préparation d'élastomères de polyuréthane, flexibles à froid, éventuellement cellulaires, par réaction de polyisocyanates organiques, polyols, dérivés d'acide gras ou d'alcool terpénique, et éventuellement d'allongeurs de chaîne ou de réticulants, en présente de catalyseurs, éventuellement de gonflants, auxiliaires et additifs, caractérisé par le fait qu'on utilise, comme polyols, des polyesters-polyols d'un indice d'OH de 40 à 120 et d'une température de transition vitreuse, mesurée comme température de transition vitreuse du segment plastifié de polyuréthane, de − 10 °C à − 80 °C, ou des polytétrahydrofuranes à groupes hydroxyle d'indice d'OH de 20 à 250 et, comme dérivés d'acide gras ou d'alcool terpénique, des esters d'acide gras et/ou alcools terpéniques alcoxylés.

2. Procédé selon la revendication 1, caractérisé par le fait que l'on utilise les esters d'acide gras et/ou alcools terpéniques alcoxylés en proportion de 0,1 à 6 parties en poids, pour 100 parties en poids de polyol et éventuellement des allongueurs de chaîne ou des réticulants.

3. Procédé selon la revendication 1, caractérisé par le fait que l'on utilise, comme esters d'acide gras alcoxylés, des produits de réaction d'une mole d'un ester d'acide gras à groupes hydroxyle ayant 8 à 26 atomes de carbone dans le reste acide gras et 1 à 30 moles d'oxyde d'éthylène et/ou oxyde de propylène.

4. Procédé selon la revendication 3, caractérisé par le fait qu'on utilise comme esters d'acide gras à groupes hydroxyle, des mono- di- et/ou triglycérides d'acide gras.

5. Procédé selon la revendication 1, caractérisé par le fait que l'on utilise, comme alcools terpéniques alcoxylés, des produits de réaction d'une mole d'un alcool terpénique ayant 10 à 25 atomes de carbone ou un mélange d'alcools terpéniques et 1 à 30 moles d'oxydes d'éthylène et/ou oxyde de propylène.

6. Procédé selon la revendication 1, caractérisé par le fait que l'on utilise, comme polyisocyanates organiques, des prépolymères polyester-polyols d'une teneur en NCO de 25 à 10 % en poids, qui sont préparés par réaction de polyisocyanates avec des polyesters-polyols d'une fonctionalité de 2,0 à 3,0.

7. Procédé selon la revendication 6, caractérisé par le fait que, pour préparer les prépolymères polyesters-polyols, on utilise, comme polyisocyanates, du 4,4'-diphénylméthane-diisocyanate, du 4,4'-diphénylméthane-diisocyanate à groupes carbodiimide et/ou allophanate.

8. Procédé selon la revendication 1, caractérisé par le fait que le rapport entre les atomes d'hydrogène réactifs des polyols, esters d'acide gras alcoxylés et/ou alcools terpéniques alcoxylés et éventuellement allongueurs de chaîne ou réticulants, et les groupes NCO des polyisocyanates ou prépolymères à groupes NCO, est de 0,90 à 1,15/1.

9. Procédé de préparation d'élastomères de polyuréthanes, flexibles à froid, cellulaires, caractérisé par le fait qu'on fait réagir :

A) des prépolymères polyester-polyols d'une teneur en NCO de 25 à 10 % en poids,

B) des polyesters-diols d'un indice d'OH de 40 à 120 et d'une température de transition vitreuse, mesurée comme température de transition vitreuse du segment plastifié de polyuréthane, de − 10 °C à − 80 °C,

C) des esters d'acide gras alcoxylés, préparés par alcoxylation d'esters d'acides gras ayant 8 à 26 atomes de carbone dans le reste acide gras, avec de l'oxyde d'éthylène et/ou oxyde de propylène, en proportion molaire de 1/1 à 1/30 et

D) éventuellement des allongeurs de chaîne ou réticulants,

en présence de catalyseurs, gonflants, éventuellement auxiliaires et additifs, en proportion de 0,1 à 6 parties en poids du composant (C) pour 100 parties en poids des composants (B) et éventuellement (C), ainsi que des rapports molaires entre les atomes d'hydrogène réactifs des composants (B), (C) et éventuellement (D) et les groupes NCO des composants (A) de 0,90 à 1,15/1.